# FASCICULE DE BREVET EUROPEEN

(11) **EP 0 661 833 B1**
(45) Date de publication et mention de la délivrance du brevet: **19.12.2001**
(21) Numéro de dépôt: 94403031.1
(22) Date de dépôt: 27.12.1994
(51) Int. Cl.: H04B 7/005

(54) **Estimateur en bande de base de la caractéristique amplitude/fréquence**
Basisband-Amplitude/Frequenz-Charakteristikschätzer
Baseband amplitude/frequency characteristic estimator

(30) Priorité: 30.12.1993 FR 9315906
(43) Date de publication de la demande: 05.07.1995
(73) Titulaire: ALCATEL, 75008 Paris (FR)
(72) Inventeur: Comte, Michel, F-95130 Franconville (FR); Lample, Gérard, F-93110 Rosny-sous-Bois (FR)
(74) Mandataire: Smith, Bradford Lee

(56) Documents cités:
- IEEE COMMUNICATIONS MAGAZINE, vol. 24, PISCATAWAY, NJ US, page 43 CHAMBERLAIN ET AL 'Receiver Techniques for Microwave Digital Radio'
- IEEE TRANSACTIONS ON VEHICULAR TECHNOLOGY, vol. VT-36, NEW YORK US, page 55 DAVYRIAN 'Mobile Digital Communications via Tone Calibration'

## Description

Le domaine de l'invention est celui des systèmes de transmission de signaux numériques par faisceaux hertziens.

L'invention concerne plus précisément un estimateur de la caractéristique amplitude/fréquence d'un signal source dont sont issues par démodulation à l'aide de deux signaux de phases orthogonales des composantes i et q en bande de base qui sont appliquées aux entrées de cet estimateur. Un tel estimateur peut notamment être utilisé dans un égaliseur fréquentiel d'un récepteur de signaux hertziens à déplacement de phase de type MDP-M (Modulation à Déplacement de Phase à M états) ou MDAP-M (Modulation à Déplacement d'Amplitude et de Phase à M états).

Un des problèmes posés par les faisceaux hertziens numériques est que le signal reçu par un récepteur peut être affecté de trajets multiples. Le spectre du signal reçu présente des évanouissements sélectifs et, au niveau du signal numérique, cela se traduit par une interférence inter-symboles. La déformation du spectre, qui à l'émission présente une symétrie autour de la porteuse, peut revêtir en particulier la forme d'une déformation couramment appelée "penchette". Un spectre présente une penchette lorsque l'amplitude du signal reçu est différente en-deçà et au-delà de la fréquence porteuse (ou intermédiaire). Cette déformation spectrale est généralement symétrique autour de la fréquence porteuse (respectivement intermédiaire). Ce phénomène s'observe lorsque l'évanouissement sélectif se produit en bord de spectre.

Il faut alors redonner, à la réception, au spectre déformé sa forme originelle, symétrique, à l'aide d'un égaliseur fréquentiel auto-adaptatif. La fonction d'un égaliseur fréquentiel est donc de modifier le spectre d'un signal reçu pour compenser les effets des trajets multiples.

Classiquement, un égaliseur fréquentiel auto-adaptatif comporte un filtre transverse recevant un signal d'entrée et fournissant un signal de sortie corrigé à un estimateur de la caractéristique amplitude/fréquence de ce signal de sortie. L'estimateur pilote le filtre transverse pour corriger cette caractéristique.

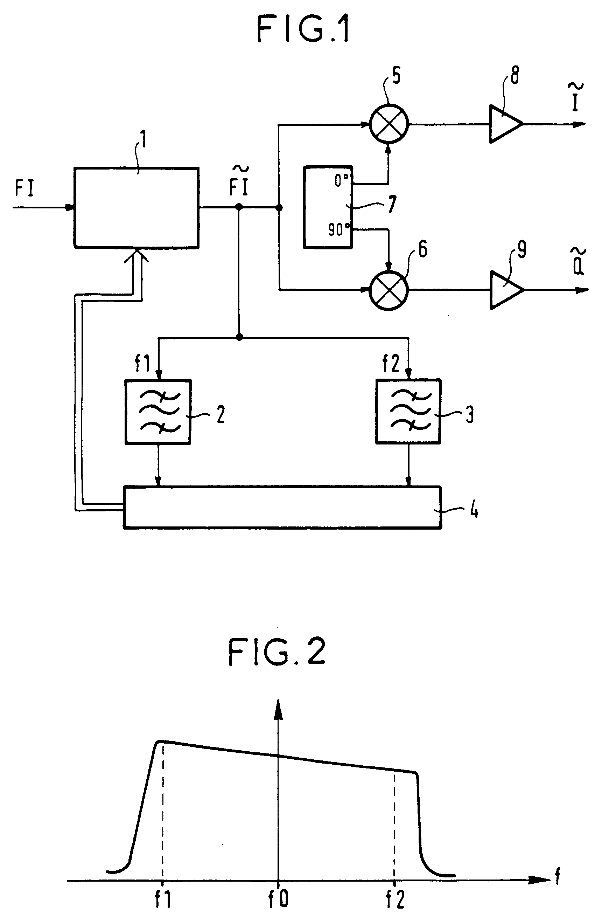

La majorité des égaliseurs fréquentiels connus fonctionne en fréquence intermédiaire. Un égaliseur fréquentiel de ce type est représenté dans l'étage de démodulation de la figure 1.

Un signal FI en fréquence intermédiaire est appliqué à l'entrée d'un filtre transverse 1 dont la sortie est constituée par un signal en fréquence intermédiaire 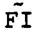 à caractéristique amplitude/fréquence corrigée. Ce signal 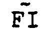 est appliqué à deux filtres bande étroite 2, 3 dont les fréquences centrales, respectivement f1 et f2, sont dans le spectre du signal FI tel que représenté à la figure 2. Cette figure 2 représente le spectre du signal FI affecté d'une penchette. Les fréquences f1 et f2 sont de part et d'autre de la fréquence f0 qui est la fréquence centrale du signal 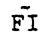 .

Les amplitudes des signaux issus des filtres 2 et 3 rendent compte de la déformation du spectre et il est ainsi possible de piloter le filtre transverse 1 pour que l'amplitude des signaux qu'il délivre soit sensiblement identique autour de la fréquence fo. La commande du filtre 1 est assurée par des moyens de traitement 4 qui génèrent des coefficients de correction appliqués au filtre 1. Le filtre 1, les filtres bande étroite 2 et 3 et les moyens de traitement 4 forment un égaliseur fréquentiel fonctionnant en fréquence intermédiaire.

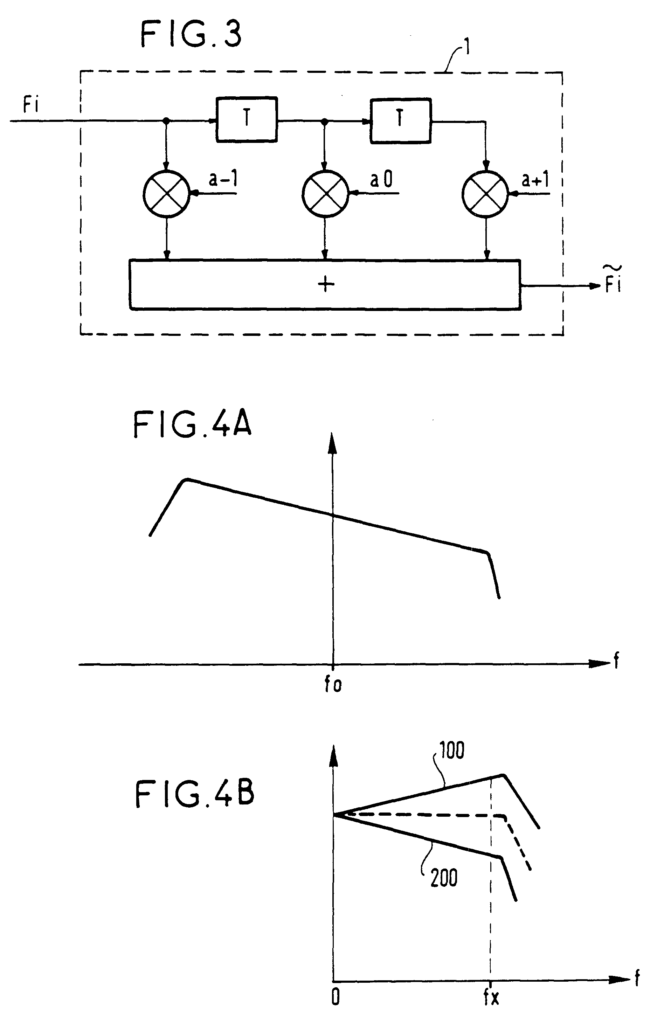

La figure 3 est un schéma synoptique classique du filtre transverse 1. Ce filtre comporte deux lignes à retard de durée T, trois multiplieurs recevant des coefficients de correction a₋₁, a₀ et a₊₁ et un sommateur dont la sortie constitue le signal corrigé 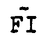 . Les retards T sont fonction de la fréquence centrale fo du signal modulé FI et du débit symbolique.

On corrige ainsi la réponse amplitude/fréquence du milieu de propagation et le spectre corrigé est plat dans la bande utile, c'est à dire exempt de penchette.

Le signal corrigé issu du filtre 1 (FIG.1) est appliqué à deux mélangeurs 5, 6 recevant deux signaux de phases orthogonales provenant d'un oscillateur local 7 fonctionnant à la fréquence intermédiaire. Les mélangeurs 5 et 6 sont suivis d'amplificateurs 8, 9 fournissant deux composantes de démodulation 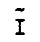 et 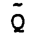 en bande de base amplifiées et corrigées.

On sait par ailleurs réaliser des récepteurs de signaux numériques à démodulation directe, c'est à dire employant un oscillateur local dont le signal de sortie a une fréquence égale à la fréquence de la porteuse du signal reçu. Dans ce cas, le signal FI de la figure 1 est remplacé par un signal hyperfréquence SHF et l'oscillateur local 8 fournit un signal de fréquence égale à celle de la fréquence porteuse.

Cependant, les égaliseurs fréquentiels fonctionnant en hyperfréquence présentent l'inconvénient d'être complexes et coûteux. C'est pourquoi on utilise de préférence des égaliseurs fréquentiels fonctionnant en fréquence intermédiaire. Il n'est dans ce cas pas possible d'effectuer une démodulation directe du signal reçu, pour récupérer directement deux composantes en bande de base, si l'on veut également réaliser une correction de la caractéristique amplitude/fréquence de ce signal reçu.

La réalisation d'un égaliseur fréquentiel fonctionnant en bande de base, c'est à dire après démodulation, pose le problème décrit en référence aux figures 4A et 4B.

La figure 4A représente le spectre observable d'un signal reçu déformé par une penchette. La fréquence centrale, notée f0, correspond à la fréquence centrale (fréquence porteuse ou fréquence intermédiaire). La figure 4B représente le spectre utile de ce signal après démodulation. Le spectre utile résultant est représenté en traits discontinus. Il provient de la somme des composantes spectrales négatives, référencées 100 et correspondant aux fréquences inférieures à f0, et des composantes spectrales positives, référencées 200 et supérieures à la fréquence f0.
Le spectre résultant est observable sur chacune des deux voies démodulées et, du fait de ce repliement des fréquences, la penchette n'est plus détectable. Une éventuelle différence d'amplitude entre les fréquences inférieures et supérieures à la fréquence centrale est donc inobservable. On ne sait ainsi pas réaliser un estimateur fonctionnant en bande de base, pouvant par exemple être destiné à piloter un filtre transverse qui corrige la caractéristique amplitude/fréquence d'un signal reçu.

D1 = IEEE Communications Magazine, vol. 24, (Nov. 1986) Piscataway, NJ, US, p. 43 : Chamberlain et al., « Receiver Techniques for Microwave Digital Radio » décrit les techniques classiques de réception des signaux numériques radioélectrique hyperfréquence. Parmi ces techniques de D1 citons en particulier l'égalisation linéaire dans le domaine temporel en boucle ouverte non récursive (cf. D1, figure 4 et texte). Cette technique peut être utilisée en bande de base ou en fréquence intermédiaire. L'architecture de la figure 4 de D1 montre un égalisateur qui peut être divisé conceptuellement en deux parties, une partie en boucle ouverte, et une partie en boucle fermée. Nous ne considérons ici que la partie boucle ouverte. Les réseaux adaptatifs interconnectés sont constitués de filtres transverses ayant une structure en lignes de retard comme dans la figure 3 de la présente demande. Selon la figure 4 de D1, ces filtres transverses fournissent leurs signaux de sortie à deux sommateurs, un signal de la voie I étant fourni à l'entrée négative d'un premier sommateur qui reçoit également un signal provenant de la voie Q sur son entrée positive. L'autre sommateur reçoit de la même manière un signal provenant de la voie Q sur son entrée négative et un signal provenant de la voie I sur son entrée positive.

Comme dans le cas précédent, le repliement de spectre, et la soustraction des signaux sur les voies I et Q, auront pour résultat la perte des informations concernant la penchette d'amplitude en fonction de la fréquence que présent le signal d'entrée avant démodulation.

La présente invention a pour objectif de fournir un estimateur, fonctionnant ainsi en bande de base, de la caractéristique amplitude/fréquence d'un signal source, en fréquence intermédiaire ou en hyperfréquence, dont sont issues par démodulation à l'aide de deux signaux de phases orthogonales des composantes en bande de base qui sont appliquées à cet estimateur. Un tel estimateur devra notamment être apte à détecter une différence d'amplitude entre les fréquences supérieures et inférieures à la fréquence porteuse (ou intermédiaire) supprimée par la démodulation, c'est à dire capable de fournir un coefficient représentatif de la caractéristique amplitude/fréquence du signal source. Ce coefficient peut notamment être utilisé pour commander un filtre transverse afin de réaliser une correction de penchette ("tilt corrector" ou encore "slope equalizer" en anglais) du signal appliqué à ce filtre.
Il est à noter que le coefficient de correction de penchette généré par l'estimateur fonctionnant en bande de base peut être indifféremment appliqué à un filtre transverse recevant comme signal d'entrée un signal en bande de base (notamment un signal obtenu par démodulation directe), un signal en fréquence intermédiaire ou alors un signal hyperfréquence, comme il sera vu par la suite.

Un objectif complémentaire de l'invention est de fournir un tel estimateur fonctionnant en bande de base fournissant également un coefficient de commande de gain à des amplificateurs. Un tel coefficient de commande de gain peut notamment être appliqué aux amplificateurs couramment placés entre l'étage de démodulation et le filtre transverse ou alors directement à ce filtre transverse.

Ces objectifs, ainsi que d'autres qui apparaîtront par la suite, sont atteints grâce à un estimateur de la caractéristique amplitude/fréquence d'un signal source dont sont issues par démodulation à l'aide de deux signaux de phases orthogonales des composantes i et q en bande de base qui sont appliquées aux entrées de cet estimateur, l'estimateur comprenant des moyens de combinaison pour engendrer des composantes complexes i+j.q et q+j.i à partir des composantes i et q, ainsi que des moyens pour évaluer les amplitudes relatives des composantes complexes, afin de fournir un coefficient représentatif de la caractéristique amplitude/fréquence de ce signal source.

L'obtention de i+j.q et q+j.i correspond à une reconstitution des fréquences positives et négatives du spectre après démodulation et il est ainsi possible de mesurer les amplitudes de ces fréquences à distance de la fréquence nulle, tout en restant dans la bande de base.

Avantageusement, les moyens de combinaison des composantes i et q fournissent les composantes complexes i+j.q et q+j.i à des filtres passe-bande dont les fréquences centrales sont égales à une fréquence donnée située dans la bande de base.

Ces moyens de combinaison sont préférentiellement constitués par deux coupleurs à deux accès d'entrée 0-90° sommant chacun sur une sortie l'une des composantes en bande de base déphasée de 90° à l'autre composante en bande de base, ce déphasage s'effectuant à la fréquence donnée.

Dans un mode de réalisation avantageux, les composantes i et q sont les deux composantes de démodulation (généralement notées I et Q) obtenues par démodulation du signal source sur deux signaux de phases orthogonales.

Lorsque l'estimateur selon l'invention est utilisé pour piloter un filtre transverse, le coefficient précité constitue un coefficient de correction de la caractéristique amplitude/fréquence d'un signal appliqué à l'entrée de ce filtre transverse auquel est également appliqué le coefficient de correction. Le signal issu du filtre transverse est alors constitué par un signal corrigé.

Ce signal corrigé peut être constitué par un signal hyperfréquence corrigé ou par un signal en fréquence intermédiaire corrigé et, dans ce cas, un étage de démodulation inséré entre le filtre transverse et l'estimateur assure une démodulation du signal corrigé sur deux signaux de phases orthogonales.

Dans un autre mode de réalisation, le signal corrigé est un signal en bande de base constitué par deux composantes de démodulation corrigées et le signal appliqué à l'entrée du filtre transverse est constitué par deux composantes en bande de base issues d'un étage de démodulation recevant le signal source.

L'estimateur de l'invention peut également comporter des moyens de sommation de |i+j.q| et |q+j.i| fournissant, après intégration, un coefficient de correction de gain. Ce coefficient peut être appliqué à des amplificateurs ou alors au filtre transverse.

L'invention concerne également un filtre transverse commandé par un tel estimateur. Ce filtre transverse comporte :
- une première et une seconde cellules de filtrage recevant chacune une des composantes de démodulation et fournissant respectivement un premier et un second signal somme ;
- des moyens de sommation du second signal somme avec un premier signal de démodulation retardé issu de la première cellule de filtrage, le second signal somme possédant deux composantes symétriques dans le temps par rapport au premier signal de démodulation retardé ;
- des moyens de soustraction du premier signal somme d'un second signal de démodulation retardé issu de la seconde cellule de filtrage, le premier signal somme possédant deux composantes symétriques dans le temps par rapport au second signal de démodulation retardé ;
les moyens de sommation et de soustraction fournissant les composantes de démodulation corrigées.

Selon une application préférentielle, le signal appliqué à l'entrée du filtre transverse est constitué par deux signaux en bande de base obtenus par démodulation directe à l'aide de deux signaux de phases orthogonales ayant la fréquence de la porteuse d'un signal hyperfréquence reçu constituant le signal source.

D'autres caractéristiques et avantages de l'invention apparaîtront à la lecture de la description suivante d'un mode de réalisation de l'estimateur et de plusieurs applications, donnés à titre illustratif et non limitatif, et des dessins annexés dans lesquels :
- la figure 1 représente un étage de démodulation de type connu comprenant un égaliseur fréquentiel fonctionnant en fréquence intermédiaire ou en hyperfréquence ;
- la figure 2 représente un spectre d'un signal déformé par une penchette ;
- la figure 3 est un schéma synoptique d'un filtre transverse de type connu pouvant être utilisé pour la réalisation de l'égaliseur fréquentiel de la figure 1 ;
- les figures 4A et 4B représentent respectivement un spectre déformé par une penchette avant et après démodulation en bande de base ;
- la figure 5 est un schéma synoptique d'un étage de démodulation d'un récepteur de signaux numériques mettant en oeuvre une démodulation directe et comportant un égaliseur fréquentiel selon l'invention fonctionnant en bande de base ;
- la figure 6 représente un mode de réalisation préférentiel du filtre transverse de la figure 5 ;
- la figure 7 représente un mode de réalisation préférentiel de l'estimateur de l'invention ;
- les figures 8 et 9 sont des schémas synoptiques d'étages de démodulation employant l'estimateur en bande de base de l'invention.

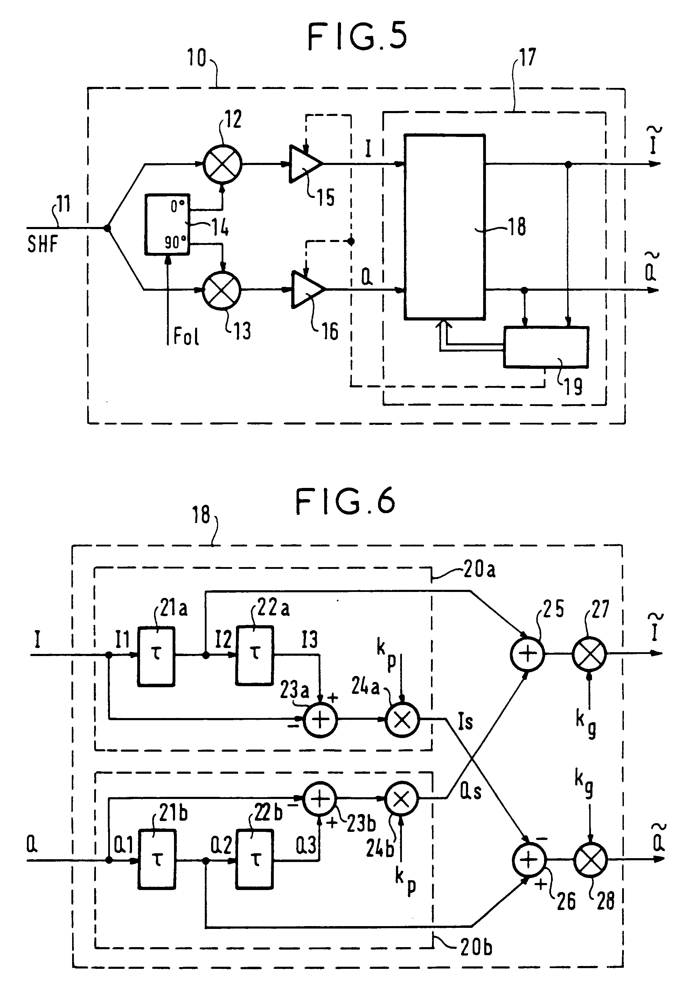

La figure 5 est un schéma synoptique d'un étage de démodulation d'un récepteur 10 de signaux numériques mettant en oeuvre une démodulation directe.

Un signal source hyperfréquence SHF est véhiculé sur une liaison 11 et appliqué à deux mélangeurs 12, 13 recevant également deux signaux en quadrature de phase issus d'un déphaseur 14 de 90°. Le déphaseur 14 reçoit un signal d'oscillateur local Fol de fréquence égale à celle de la porteuse du signal hyperfréquence SHF, résultant éventuellement d'une récupération de porteuse. Les signaux issus des mélangeurs 12 et 13 sont donc des signaux en bande de base qui sont appliqués à des amplificateurs 15, 16 à commande automatique de gain. La commande de gain est représentée en traits discontinus et peut être obtenue directement à l'aide de l'estimateur de l'invention, comme il sera vu par la suite.

Les signaux de sortie des amplificateurs 15, 16 constituent les deux composantes de démodulation I et Q en bande de base obtenues par démodulation sur deux porteuses en quadrature du signal source SHF. Les signaux I et Q sont appliqués à un égaliseur fréquentiel 17 auto-adaptatif fonctionnant en bande de base. L'égaliseur fréquentiel 17 comporte un filtre transverse 18 fournissant deux composantes de démodulation en bande de base corrigées 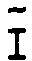 et 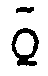 constituant le signal de sortie corrigé. Ces composantes sont appliquées à un estimateur 19 selon l'invention qui pilote le filtre transverse 18.

Il est à noter que le signal SHF peut également être remplacé par un signal en fréquence intermédiaire et Fol est alors égal à cette fréquence intermédiaire.

La figure 6 représente un mode de réalisation préférentiel du filtre transverse 18. Ce filtre est destiné à corriger une penchette, c'est à dire une différence d'amplitude des fréquences situées en-deçà et au-delà de la fréquence porteuse. Le signal appliqué à l'entrée du filtre transverse 18 est constitué, de manière générale, par les deux composantes de démodulation I, Q obtenues par démodulation sur deux signaux de phases orthogonales d'un signal source (en fréquence intermédiaire ou hyper-fréquence).

Le filtre transverse 18 comprend une première 20a et une seconde 20b cellules de filtrage identiques. Chaque cellule reçoit une des composantes de démodulation I, Q et fournit respectivement un premier et un second signal somme, respectivement notés Iₛ et Qₛ.

Chaque cellule de filtrage 20a, 20b comporte une première cellule retard 21a, 21b recevant respectivement les composantes de démodulation I et Q et fournissant respectivement un premier et un second signal de démodulation retardé I₂, Q₂. Une seconde cellule retard 22a, 22b est placée en sortie de la première cellule retard de chaque cellule de filtrage pour fournir des signaux retardés I₃ et Q₃. Chaque cellule retard 21a, 21b, 22a et 22b retarde le signal appliqué à son entrée d'un temps τ que l'on peut choisir indépendamment de la fréquence centrale du signal modulé et du temps symbole.

Des soustracteurs 23a et 23b soustraient les signaux d'entrée, notés I₁ et Q₁ des signaux I₃ et Q₃ respectivement. Les signaux de sortie de ces soustracteurs 23a, 23b sont multipliés, à l'aide de multiplieurs 24a et 24b, par un coefficient kₚ, appelé par la suite coefficient de correction de penchette et fourni par l'estimateur 19, pour fournir les premier et second signaux somme Iₛ et Qₛ.

On a :
. Iₛ = kₚ.(I₃-I₁) avec I₁ étant le signal appliqué à l'entrée de la cellule de filtrage 20a, I₃ étant le signal I₁ retardé de 2τ, kₚ le coefficient de correction de penchette, et
. Qₛ = kₚ.(Q₃-Q₁) avec Q₁ étant le signal appliqué à l'entrée de la cellule de filtrage 20b, Q₃ étant le signal Q₁ retardé de 2τ.

Des moyens de sommation 25 somment le second signal somme Qₛ avec le signal I₂ appelé premier signal de démodulation retardé. Le second signal somme Qₛ possède deux composantes symétriques dans le temps par rapport au premier signal de démodulation retardé I₂ puisqu'il prend en compte les signaux Q₁ et Q₃.

Des moyens de soustraction 26 soustraient du premier signal somme Iₛ le signal Q₂ appelé second signal de démodulation retardé. Le premier signal somme Iₛ possède également deux composantes symétriques dans le temps par rapport au second signal de démodulation retardé Q₂.

Les signaux de sortie des moyens de sommation 25 et de soustraction 26 constituent respectivement les composantes de démodulation corrigées 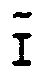 et 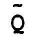 .

On notera que la fonction de transfert H(jω) des cellules de filtrage 20a, 20b est parfaitement réelle au retard e^{-jωτ} près et linéaire en phase et donc exempte de distorsion de temps de propagation de groupe (réponse impulsionnelle symétrique).

Du fait des distorsions inter-symboles introduites par les trajets multiples, Iₛ a une composante due à Q et Qₛ une composante due à I.

Les composantes de démodulation corrigées 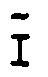 et 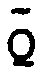 sont appliquées à un organe de décision non représenté fonctionnant à la fréquence symbole, permettant de restituer les symboles émis. On notera donc que l'égaliseur fréquentiel fonctionne avant décision.

Les composantes 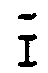 et 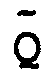 sont appliquées à l'estimateur 19 (Fig.5) pilotant le filtre transverse 18.

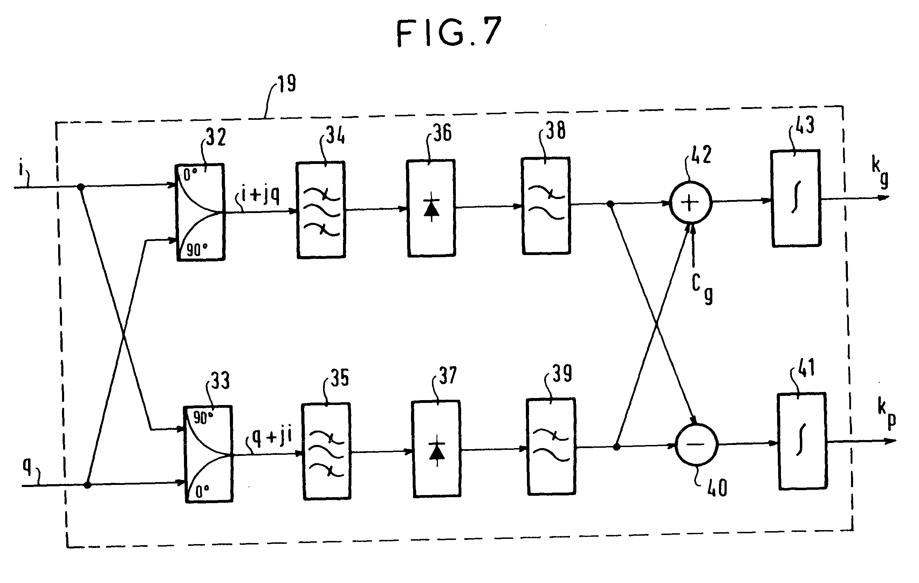

La figure 7 représente un mode de réalisation préférentiel de cet estimateur.

L'estimateur 19 représenté est réalisé entièrement en technologie analogique. De même que dans l'état de la technique, sa fonction est d'estimer la caractéristique amplitude/fréquence d'un signal source. Ici, des composantes I et Q sont obtenues par démodulation du signal source à l'aide de deux signaux de phases orthogonales et ces composantes sont appliquées aux entrées de l'estimateur. L'estimateur comporte des moyens de traitement qui génèrent un coefficient kₚ représentatif de la caractéristique amplitude/fréquence de ce signal source.

On adoptera dans la suite de cette description les notations suivantes : les signaux appliqués aux entrées de l'estimateur sont des composantes en bande de base notées i et q qui correspondent respectivement soit aux composantes de démodulation non corrigées I et Q, soit aux composantes de démodulation corrigées 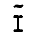 et 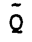 si l'estimateur de l'invention est employé pour piloter un filtre transverse.

Dans l'invention, le signal appliqué à l'entrée de l'estimateur est donc constitué par deux composantes i et q, obtenues par démodulation d'un signal source à l'aide de deux signaux de phases orthogonales. Les moyens de traitement représentés génèrent ce coefficient kₚ égal à la différence entre |i+j.q| et |q+j.i|.

L'estimateur comporte deux entrées auxquelles sont appliquées les composantes en bande de base i et q, chaque composante étant appliquée à deux moyens de combinaison référencés 32 et 33. Ces moyens de combinaison 32 et 33 fournissent respectivement i+j.q et q+j.i et sont par exemple constitués par deux coupleurs 0-90° à deux accès d'entrée. Ils apportent un déphasage de 90° d'une des composantes en bande de base par rapport à l'autre composante en bande de base à une fréquence donnée située dans la bande de base et une sommation de cette autre composante à la composante déphasée. Cette fréquence donnée, notée fx, est le plus possible éloignée de la fréquence nulle et représentée sur la figure 4B. Pour une bande de base réelle de 20 MHz, on choisira par exemple fx égal à 10 MHz pour obtenir une sensibilité maximale.

Les moyens de combinaison sont prévus pour déphaser de 90° l'une des composantes à cette fréquence donnée. On peut utiliser des cellules de filtre telles que des circuits LC apportant un déphasage de 90° à la fréquence choisie ou préférentiellement des coupleurs 0-90° hybrides du commerce dont le déphasage est constant sur une plus large plage de fréquence.

Dans la figure 7, les moyens de combinaison sont constitués de coupleurs 0-90°. La composante i est appliquée à l'entrée 0° du coupleur 32, l'entrée 90° de ce coupleur recevant la composante q. De même, la composante q est appliquée à l'entrée 0° du coupleur 33, l'entrée 90° de ce coupleur recevant la composante i. Les coupleurs 32 et 33 fournissent ainsi respectivement sur leurs sorties des composantes complexes i+j.q et q+j.i à partir des composantes i et q appliquées à leurs entrées. Ceci permet de générer des signaux (en sortie des coupleurs 32 et 33) qui sont représentatifs des fréquences supérieures et inférieures à la fréquence centrale initiale, supprimée par la démodulation. On reconstitue ainsi les fréquences positives et négatives du spectre (par rapport à la fréquence centrale).

Les composantes complexes sont appliquées à des filtres passe-bande 34, 35 dont les fréquences centrales sont de préférence identiques et égales à cette fréquence fx. L'estimateur comporte aussi des moyens 36 à 40 pour évaluer les amplitudes relatives des composantes complexes i+j.q et q+j.i, afin de fournir le coefficient kₚ représentatif de la caractéristique amplitude/fréquence du signal source. Ces moyens comportent par exemple deux détecteurs d'énergie 36, 37 suivis de filtres passe-bas 38, 39 permettent d'obtenir |i+j.q| et |q+j.i|. Un soustracteur 40 fournit l'écart entre |1+j.q| et |q+j.i|. Cet écart est représentatif de la différence d'énergie existant entre les fréquences f0+fx et f0-fx avant démodulation et donc proportionnel à l'atténuation d'amplitude du spectre dans la bande considérée. Un intégrateur 41 fournit le coefficient kₚ appliqué aux deux cellules de filtrage 20a et 20b de la figure 6.

La structure proposée à la figure 7 est en cela avantageuse qu'elle permet d'utiliser des coupleurs hybrides 90° du commerce, fonctionnant à une fréquence située dans la bande de base, suivis de simples filtres sélectionnant des bandes de fréquences dont les amplitudes sont représentatives de la penchette. La réalisation de l'estimateur 19 est très simple puisqu'elle ne fait intervenir que des composants classiques (coupleurs hybrides, filtres passe-bande et passe-bas, redresseurs,...) pour corriger la caractéristique amplitude/fréquence du signal source appliqué à l'entrée du filtre transverse.

Le filtre transverse 18 peut différer du mode de réalisation représenté, l'essentiel étant que le coefficient de correction de penchette kₚ soit appliqué à un signal rendant compte de l'influence mutuelle de I sur Q, c'est à dire de l'interférence inter-symboles.

L'estimateur 19 peut en outre comporter un sommateur 42 fournissant |i+j.q| + |q+j.i|, cette valeur étant proportionnelle à l'amplitude du signal en bande de base. Un gain de consigne C_{g} peut éventuellement également être appliqué au sommateur 42. L'intégration de cette valeur, par un intégrateur 43, permet ainsi d'obtenir un coefficient de commande de gain k_{g}, appliqué soit aux amplificateurs à gain variable (référencés 15 et 16 sur la figure 5) situés en amont du filtre transverse (liaison représentée en traits discontinus), soit constituant le coefficient k_{g} appliqué aux multiplicateurs 27, 28 du filtre transverse représenté à la figure 6.

On notera que, contrairement aux égaliseurs fonctionnant en fréquence intermédiaire, l'égaliseur fréquentiel décrit jusqu'ici ne nécessite pas de modifier le retard τ apporté par les cellules retard en fonction du débit symbolique et de la fréquence centrale du signal en fréquence intermédiaire (ou éventuellement, quoique dans une moindre mesure, hyperfréquence).

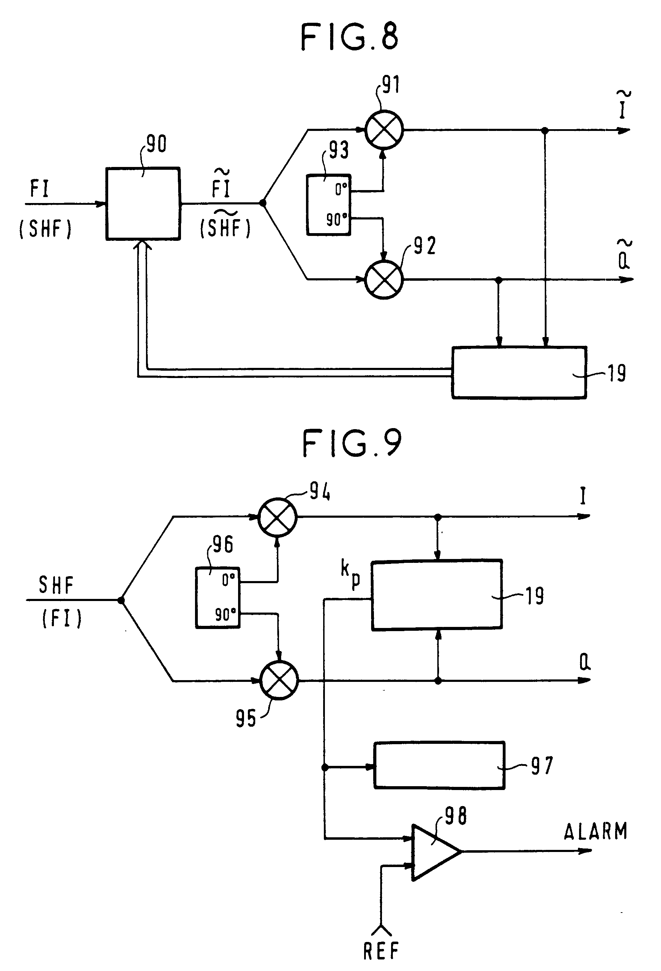

La figure 8 est un schéma synoptique d'un étage de démodulation employant l'estimateur 19 en bande de base de l'invention.

Le signal source, constitué par un signal en fréquence intermédiaire FI ou hyperfréquence SHF, est appliqué à l'entrée d'un filtre transverse 90 fonctionnant en fréquence intermédiaire ou en hyperfréquence. Le signal de sortie du filtre 90 est un signal corrigé hyperfréquence SHF ou en fréquence intermédiaire FI. Ce signal corrigé est appliqué à un étage de démodulation comprenant deux mélangeurs 91, 92 recevant des signaux de démodulation en quadrature de phase d'un oscillateur local 93. Les signaux de sortie des mélangeurs 91, 92 constituent deux composantes de démodulation 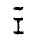 et 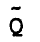 corrigées en bande de base. Ces composantes sont appliquées à l'estimateur 19 selon l'invention qui génère notamment le coefficient kₚ destiné à corriger la penchette du spectre du signal source. Dans ce cas d'utilisation, kₚ est égal à la différence entre 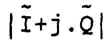 et | 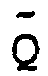 +j. 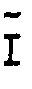 | (i = 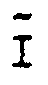 et q = 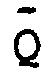 ). L'estimateur de l'invention peut donc être également utilisé pour générer un coefficient de correction de penchette kₚ appliqué à un filtre transverse ne fonctionnant pas en bande de base.

La figure 9 représente un étage de démodulation où l'estimateur en bande de base de l'invention n'est pas utilisé pour fournir un coefficient de correction de penchette à un filtre transverse.

Un signal source, hyperfréquence SHF ou en fréquence intermédiaire FI, est démodulé à l'aide d'un étage de démodulation comportant deux mélangeurs 94, 95 recevant deux signaux de phases orthogonales d'un oscillateur local 96. Les composantes de démodulation I et Q fournies par ces mélangeurs 94, 95 sont en bande de base. On effectue une démodulation directe si le signal source est hyperfréquence SHF et si l'oscillateur local 96 fournit de signaux de phases orthogonales de fréquence égale à la fréquence porteuse du signal SHF. Les composantes I et Q non corrigées sont appliquées à l'estimateur 19 selon l'invention qui génère notamment le coefficient kₚ.

Selon deux applications pouvant être complémentaires, le coefficient kₚ est fourni à des moyens d'affichage 97 - éventuellement précédés de moyens de traitement - renseignant l'utilisateur sur la penchette affectant le signal SHF reçu, et/ou à un détecteur 98 générant un signal d'alarme ALARM si la valeur de kₚ devient supérieure à une valeur de référence REF donnée correspondant à une penchette maximale à ne pas dépasser. Ces utilisations de l'estimateur 19 conviennent par exemple pour la mise au point de stations émettrices/réceptrices dans un réseau de télécommunications par satellite ou par relais terrestres.

L'homme du métier imaginera aisément d'autres applications de l'estimateur de l'invention, non nécessairement liées à la commande d'un filtre de correction de penchette d'un signal reçu.

## Revendications

1. Estimateur (19) de la caractéristique amplitude/fréquence d'un signal source (SHF, FI, 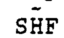 , 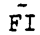 ) dont sont issues par démodulation à l'aide de deux signaux de phases orthogonales des composantes i et q en bande de base qui sont appliquées aux entrées dudit estimateur (19), ledit estimateur (19) comprenant des moyens de combinaison (32, 33) pour engendrer des composantes complexes i+j.q et q+j.i à partir desdites composantes i et q, ainsi que des moyens (34 à 40) pour évaluer les amplitudes relatives desdites composantes complexes (i+j.q et q+j.i), afin de fournir un coefficient (kₚ) représentatif de ladite caractéristique amplitude/fréquence dudit signal source (SHF, FI, 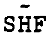 , 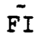 ).

2. Estimateur selon la revendication 1, **caractérisé en ce que** lesdits moyens de combinaison (32, 33) desdites composantes i et q fournissent lesdites composantes complexes (i+j.q, q+j.i) à des filtres passe-bande (34, 35) dont les fréquences centrales sont égales à une fréquence donnée (fx) située dans ladite bande de base.

3. Estimateur selon l'une quelconque des revendications 1 et 2, **caractérisé en ce que** lesdits moyens de combinaison sont constitués par deux coupleurs à deux accès d'entrée 0-90° (32, 33) sommant chacun sur une sortie l'une desdites composantes (i, q) en bande de base déphasée de 90° à l'autre composante (q, i) en bande de base, à ladite fréquence donnée (fx).

4. Estimateur selon l'une quelconque des revendications 1 à 3, **caractérisé en ce que** lesdites composantes i et q sont les deux composantes de démodulation I et Q obtenues par démodulation sur deux signaux de phases orthogonales dudit signal source (FI, SHF).

5. Estimateur selon l'une quelconque des revendications 1 à 3, **caractérisé en ce que** ledit coefficient (kₚ) constitue un coefficient de correction de la caractéristique amplitude/fréquence d'un signal (I, Q, FI, SHF) appliqué à l'entrée d'un filtre transverse (18, 90) auquel est également appliqué ledit coefficient de correction (kₚ), le signal issu dudit filtre transverse (18, 90) étant appelé signal corrigé ( 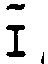 , 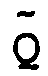 , 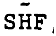 , 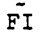 ).

6. Estimateur selon la revendication 5, **caractérisé en ce que** ledit signal corrigé est un signal hyperfréquence corrigé ( 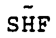 ) ou en fréquence intermédiaire corrigé ( 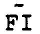 ) et **en ce qu'**un étage de démodulation (91, 92, 93) inséré entre ledit filtre transverse (90) et ledit estimateur (19) assure une démodulation sur deux signaux de phases orthogonales dudit signal corrigé ( 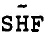 , 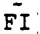 ).

7. Estimateur selon la revendication 5, **caractérisé en ce que** ledit signal corrigé est un signal en bande de base ( 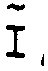 , 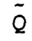 ) constitué par deux composantes de démodulation corrigées ( 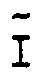 , 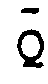 ) et **en ce que** le signal appliqué à l'entrée dudit filtre transverse (18) est constitué par deux composantes en bande de base (I, Q) issues d'un étage de démodulation (91, 92, 93) recevant ledit signal source (SHF, FI).

8. Estimateur selon l'une quelconque des revendications 1 à 7, **caractérisé en ce qu'**il comporte également des moyens de sommation (42) de |i+j.q| et |q+j.i| fournissant, après intégration (43), un coefficient de correction de gain (k_{g}).

9. Filtre transverse (18) commandé par un estimateur (19) selon l'une des revendications 5 à 8, **caractérisé en ce qu'**il comporte :
- une première et une seconde cellules de filtrage (20a, 20b) recevant chacune une desdites composantes de démodulation (I, Q) et fournissant respectivement un premier et un second signal somme (Iₛ, Qₛ);
- des moyens de sommation (25) dudit second signal somme (Qₛ) avec un premier signal de démodulation retardé (I₂) issu de ladite première cellule de filtrage (20a), ledit second signal somme (Qₛ) possédant deux composantes symétriques dans le temps par rapport audit premier signal de démodulation retardé (I₂) ;
- des moyens de soustraction (26) dudit premier signal somme (Iₛ) d'un second signal de démodulation retardé (Q₂) issu de ladite seconde cellule de filtrage (20b), ledit premier signal somme (Iₛ) possédant deux composantes symétriques dans le temps par rapport audit second signal de démodulation retardé (Q₂) ;
lesdits moyens de sommation (25) et de soustraction (26) fournissant lesdites composantes de démodulation corrigées ( 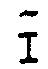 , 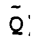 ).

10. Filtre transverse (18) selon la revendication 9, **caractérisé en ce que** ledit signal appliqué à l'entrée dudit filtre transverse (18) est constitué par deux signaux en bande de base (I, Q) obtenus par démodulation directe (12, 13, 14) à l'aide de deux signaux de phases orthogonales ayant la fréquence (Fol) de la porteuse d'un signal hyperfréquence reçu (SHF) constituant ledit signal source.

## Patentansprüche

1. Schätzer (19) für die Amplituden/Frequenz-Charakteristik eines Quellensignals (SHF, FI, 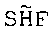 , 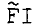 ), von dem durch Demodulation mit Hilfe von zwei Signalen mit orthogonalen Phasen Komponenten i und q im Basisband stammen, die auf die Eingänge des Schätzers (19) gegeben werden, wobei der Schätzer (19) Kombinationsmittel (32, 33) zum Erzeugen von komplexen Komponenten i+j.q und q+j.i ausgehend auf den Komponenten i und 1 sowie Mittel (34 bis 40) zum Auswerten der relativen Amplituden der komplexen Komponenten (i+j.q und q+j.i) umfasst, um einen Koeffizienten (kₚ) zu liefern, der die Amplituden/Frequenz-Charakteristik des Quellensignals (SHF, FI, 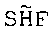 , 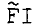 ) darstellt.

2. Schätzer nach Anspruch 1, **dadurch gekennzeichnet, dass** die Kombinationsmittel (32, 33) für die Komponenten i und q die komplexen Komponenten (i+j.q, q+j.i) Passbandfiltern (34, 35) zuführt, deren Mittenfrequenzen gleich einer gegebenen Frequenz (fx) sind, die im Basisband liegt.

3. Schätzer nach einem der Ansprüche 1 und 2, **dadurch gekennzeichnet, dass** die Kombinationsmittel aus zwei Kopplern mit zwei Eingangszugängen 0-90° (accès d'entrée 0-90°) (32, 33) besteht, die jeweils auf einem Ausgang die eine der Komponenten (i, q) im Basisband, die um 90° phasenverschoben ist, mit der anderen Komponente (q, i) im Basisband bei der gegebenen Frequenz (fx) summiert.

4. Schätzer nach einem der Ansprüche 1 bis 3, **dadurch gekennzeichnet, dass** die Komponenten i und q die beiden Demodulationskomponenten I und Q sind, die durch Demodulation auf zwei Signalen des Quellensignals (FI, SHF) mit orthogonalen Phasen erhalten werden.

5. Schätzer nach einem der Ansprüche 1 bis 3, **dadurch gekennzeichnet, dass** der Koeffizient (kₚ) einen Korrekturkoeffizienten für die Amplituden/Frequenz-Charakteristik eines Signals (I, Q, FI, SHF) bildet, das auf den Eingang eines Transversalenfilters (18, 90) gegeben wird, an den auch der Korrekturkoeffizient (kₚ) gegeben wird, wobei das vom Transversalenfilter (18, 90) stammende Signal korrigiertes Signal ( 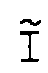 , 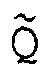 , 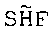 , 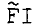 ) genannt wird.

6. Schätzer nach Anspruch 5, **dadurch gekennzeichnet, dass** das korrigierte Signal ein korrigiertes Ultrahochfrequenzsignal ( 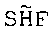 ) oder ein korrigiertes Zwischenfrequenzsignal ( 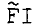 ) ist und dass die Demodulationsstufe (91, 92, 93), die zwischen das Transversalenfilter (90) und den Schätzer (19) eingefügt ist, eine Demodulation auf zwei Signalen mit orthogonalen Phasen des korrigierten Signals ( 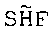 ) sicherstellt.

7. Schätzer nach Anspruch 5, **dadurch gekennzeichnet, dass** das korrigierte Signal ein Signal im Basisband ( 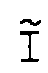 , 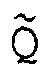 ) ist, das aus zwei korrigierten Demodulationskomponenten ( 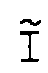 , 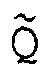 ) besteht, und dass das auf den Eingang des Transversalenfilters (18) gegebene Signal aus zwei Komponenten (I, Q) im Basisband bestehen, die von einer Demodulationsstufe (91, 92, 93) stammen, die das Quellensignal (SHF, FI) empfängt.

8. Schätzer nach einem der Ansprüche 1 bis 7, **dadurch gekennzeichnet, dass** sie auch Summierungsmittel (42) für li+j.ql und |q+j.i| umfasst, die nach Integration (43) einen Verstärkungskorrekturkoeffizienten (k_{g}) liefern.

9. Transversalenfilter (18), der von einem Schätzer (19) nach einem der Ansprüche 5 bis 8) gesteuert wird, **dadurch gekennzeichnet, dass** er umfasst:
- eine erste und eine zweite Filterzelle (20a, 20b), die jeweils eine der Demodulationskomponenten (I, Q) empfangen und ein erstes bzw. ein zweites Summensignal (I_{S}, Q_{S}) liefern;
- Mittel (25) zum Summieren des zweiten Summensignals (Qₛ) mit einem ersten verzögerten Demodulationssignal (I₂), das von der ersten Filterzelle (20a) stammt, wobei das zweite Summensignal (Qₛ) zwei in Bezug auf das erste verzögerte Demodulationssignal (I₂) in der Zeit symmetrische Komponenten besitzt;
- Mittel (26) zum Subtrahieren des ersten Summensignals (Iₛ) von einem zweiten verzögerten Demodulationssignal (Q₂), das von der zweiten Filterzelle (20b) stammt,
wobei das erste Summensignal (Iₛ) zwei in Bezug auf das zweite verzögerte Demodulationssignal (Q₂) in der Zeit symmetrische Komponenten besitzt;
wobei die Summier- (25) und Substrahiermittel (26) die korrigierten Demodulationskomponenten ( 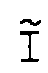 , 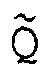 ) liefern.

10. Transversalenfilter (18) nach Anspruch 9, **dadurch gekennzeichnet, dass** das auf den Eingang des Transversaltenfilters (18) gegebene Signal aus zwei Signalen (I, Q) im Basisband besteht, die durch direkte Demodulation (12, 13, 14) mit Hilfe der beiden Signale mit orthogonalen Phasen erhalten werden, die die Frequenz (Fol) der Trägerwelle eines empfangenen Ultrahochfrequenzsignals (SHF) besitzen, das das Quellensignal bildet.

## Claims

1. Estimator (19) for estimating the amplitude/frequency characteristic of a source signal (SHF, FI, 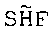 , 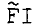 ) from which baseband components i and q which are applied to the inputs of said estimator (19) are derived by demodulation using two signals having orthogonal phases, said estimator (19) including combining means (32, 33) for generating complex components i+j.q and q+j.i from said components i and q and means (34 to 40) for evaluating the relative amplitudes of said complex components (i+j,q and q+j.i) in order to produce a coefficient (kₚ) representative of said amplitude/frequency characteristic of said source signal (SHF, FI, 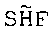 , 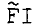 ).

2. Estimator according to claim 1 **characterized in that** said combining means (32, 33) for combining said components i and q supply said complex components (i+j.q, q+j.i) to bandpass filters (34, 35) having centre frequencies equal to a given frequency (fx) in said baseband.

3. Estimator according to either of claims 1 and 2 **characterized in that** said combining means comprise two couplers with two 0-90° input ports (32, 33) each summing at one output one of said baseband components (i, q) and the other of said baseband components (q, i) after it is phase-shifted 90° at said given frequency (fx).

4. Estimator according to any of claims 1 to 3 **characterized in that** said components i and q are the two demodulation components I and Q obtained by demodulating said source signal (FI, SHF) using two signals having orthogonal phases.

5. Estimator according to any of claims 1 to 3 **characterized in that** said coefficient (kₚ) constitutes a correction coefficient for the amplitude/frequency characteristic of a signal (I, Q, FI, SHF) applied to the input of a transversal filter (18, 90) to which said correction coefficient (kₚ) is also applied, the output signal of said transversal filter (18, 90) being a corrected signal ( 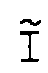 , 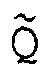 , 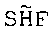 , 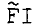 ).

6. Estimator according to claim 5 **characterized in that** said corrected signal is a microwave corrected signal ( 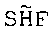 ) or an intermediate frequency corrected signal ( 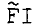 ) and **in that** a demodulator stage (91, 92, 93) between said transversal filter (90) and said estimator (19) demodulates said corrected signal ( 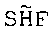 , 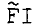 ) using two signals having orthogonal phases.

7. Estimator according to claim 5 **characterized in that** said corrected signal is a baseband signal ( 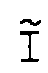 , 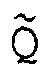 ) made up of two corrected demodulation components ( 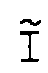 , 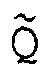 ) and **in that** the signal applied to the input of said transversal filter (18) is made up of two baseband components (I, Q) from a demodulator stage (91, 92, 93) receiving said source signal (SHF, FI).

8. Estimator according to any of claims 1 to 7 **characterized in that** it further includes summing means (42) for summing |i+j.q| and |q+j.i supplying, after integration (43), a gain correction coefficient (k_{g}).

9. Transversal filter (18) controlled by an estimator (19) according to any of claims 5 to 8 **characterized in that** it includes:
- first and second filter circuits (20a, 20b) each receiving one of said demodulation components (I, Q) and supplying respective first and second sum signals (Iₛ, Qₛ);
- summing means (25) for summing said second sum signal (Qₛ) with a delayed first demodulation signal (I₂) from said first filter circuit (20a), said second sum signal (Qₛ) having two components symmetrical in time about said first delayed demodulation signal (I₂);
- subtractor means (26) for subtracting said first sum signal (Iₛ) from a second delayed demodulation signal (Q₂) from said second filter circuit (20b), said first sum signal (Iₛ) having two components symmetrical in time about said second delayed demodulation signal (Q₂);
said summing means (25) and said subtractor means (26) supplying said corrected demodulation components ( 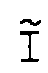 , 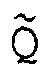 ).

10. Transversal filter (18) according to claim 9 **characterized in that** said signal applied to the input of said transversal filter (18) is made up of two baseband signals (I, Q) obtained by direct demodulation (12, 13, 14) using two signals having orthogonal phases at a frequency (Fol) equal to the carrier frequency of a received microwave signal (SHF) constituting said source signal.
